# EUROPÄISCHE PATENTSCHRIFT

(11) **EP 2 632 760 B1**
(45) Veröffentlichungstag und Bekanntmachung des Hinweises auf die Patenterteilung: **13.06.2018**
(21) Anmeldenummer: 11761028.7
(22) Anmeldetag: 02.09.2011
(51) Int. Cl.: B60L 3/04, B60L 3/00, H02J 7/00

(54) **STROMVERSORGUNGSEINRICHTUNG, VERFAHREN ZUM TRENNEN EINER BATTERIE VON EINER ANSCHLUSSEINRICHTUNG UND KRAFTFAHRZEUG**
POWER SUPPLY DEVICE, METHOD FOR DISCONNECTING A BATTERY FROM A CONNECTION DEVICE AND MOTOR VEHICLE
DISPOSITIF D'ALIMENTATION EN COURANT, PROCÉDÉ PERMETTANT DE SÉPARER UNE BATTERIE D'UN DISPOSITIF DE RACCORDEMENT ET VÉHICULE À MOTEUR

(30) Priorität: 27.10.2010 DE 102010042992
(43) Veröffentlichungstag der Anmeldung: 04.09.2013
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: GLESS, Michael, 70437 Stuttgart-Zazenhausen (DE); ANGERBAUER, Ralf, 71696 Möglingen (DE)
(74) Vertreter: Bee, Joachim
(86) Internationale Anmeldenummer: PCT/EP2011/065160
(87) Internationale Veröffentlichungsnummer: WO 2012/055618

(56) Entgegenhaltungen:
- EP-A1- 1 551 088
- EP-A1- 2 221 938
- DE-A1- 4 040 405
- US-A1- 2008 297 303

## Beschreibung

Die vorliegende Erfindung betrifft eine Stromversorgungseinrichtung, die eine erste elektrische Leitung und mindestens eine daran angeschlossene Batterie und einen in der ersten elektrischen Leitung angeordneten elektrisch betätigbaren Trennschalter zur Unterbrechung eines Stromflusses in der ersten elektrischen Leitung umfasst.
Außerdem betrifft die Erfindung ein Verfahren zum Trennen einer Batterie von einer mit einer ersten elektrischen Leitung mit der Batterie gekoppelten Anschlusseinrichtung mittels eines in der ersten elektrischen Leitung angeordneten elektrisch betätigbaren Trennschalters zur Unterbrechung eines Stromflusses in der ersten elektrischen Leitung.
Des Weiteren betrifft die vorliegende Erfindung ein Kraftfahrzeug, welches die erfindungsgemäße Stromversorgungseinrichtung aufweist.

### Stand der Technik

Insbesondere beim Einsatz von Lithium-Ionen-Batterien in Kraftfahrzeugen kann es erforderlich sein, zu Wartungs- und/oder Reparaturzwecken das gesamte Bordnetz des Kraftfahrzeuges spannungsfrei zu schalten. Es soll dabei sichergestellt werden, dass eine einfache Wiedereinschaltung des Bordnetzes nicht möglich ist, um eine unbeabsichtigte oder unbefugte Wiedereinschaltung des Bordnetzes während der Durchführung der Reparatur- oder Wartungsarbeiten zu verhindern. Zur Realisierung einer Wiedereinschaltung soll wenigstens eine zusätzliche Operation durchgeführt werden, von der anzunehmen ist, dass sie unbefugten Personen nicht bekannt ist oder unbeabsichtigt nicht durchgeführt werden kann.

Zu diesem Zweck werden so genannte Service-Stecker angeboten, die im Wesentlichen den Aufbau eines Schutzschalters aufweisen. Alternativ werden Schmelzsicherungen eingesetzt. Beide Ausführungsformen werden bevorzugt an der Außenseite eines Batteriegehäuses angeordnet, so dass sie manuell zugänglich sind. Bei Auslösung des so genannten Service-Steckers muss dieser, um ein Wiedereinschalten zu ermöglichen, manuell wieder in den geschlossenen Zustand geschaltet werden. Bei Auslösung einer Schmelzsicherung muss diese manuell ausgetauscht werden, um eine Wiedereinschaltung des Systems zu ermöglichen.

Nachteilig an den genannten Ausführungsformen ist, dass auf Grund der Durchführung von elektrischen Kontakten von der jeweiligen Sicherung zur Batterie im Gehäuse Öffnungen vorhanden sein müssen, die gegebenenfalls Undichtigkeiten des Gehäuses bewirken und somit gegebenenfalls zur Senkung der Lebensdauer der im Gehäuse aufgenommenen Batterie auf Grund ungünstiger Temperatur-, Druck- und/oder Feuchtigkeitswerte führen können. Außerdem ist die Anordnung der genannten Sicherung auf dem Batteriegehäuse konstruktiv aufwendig, so dass erhöhte Herstellungskosten anfallen. Die Anordnung der Sicherung außerhalb des Batteriegehäuseinnenraumes ist jedoch notwendig, um die manuelle Zugängigkeit zu gewährleisten.

Ein genannter Service-Stecker ist zum Beispiel in der DE 10 2008 028 933 A1 offenbart, der dort als Stromkreisunterbrechungsvorrichtung bezeichnet ist.

In den Dokumenten JP 2008 243 710 A und US 2008/0297303 A1 sind elektrische Systeme dargestellt, bei denen Sicherheitseinrichtungen in Form eines Service-Steckers in einer direkt mit der Batterie verbundenen Stromleitung angeordnet sind. Durch die Auslösung des Service-Steckers wird der Stromkreis, in dem die Batterie angeordnet ist, getrennt, so dass die Batterie vom restlichen Netz abgekoppelt ist und Wartungs- und/oder Reparaturarbeiten durchgeführt werden können.

Der Service-Stecker muss dabei eine entsprechend hohe elektrische Leitfähigkeit aufweisen, damit er den von der Batterie zur Verfügung gestellten Strom leiten kann. Es kann dabei davon ausgegangen werden, dass je höher die zu übertragende elektrische Leistung in einer Leitung ist, umso größer und kostenaufwendiger die entsprechende Sicherung sein muss.

Eine Trennung der an die Batterie angeschlossenen elektrischen Leitung wird dann realisiert, wenn der Service-Stecker entsprechend manuell geschaltet oder auch aus der Leitung entfernt wird oder wenn ein derartiger Überstrom in der elektrischen Leitung besteht, dass der Service-Stecker auslöst.

EP 2 221 938 A1 betrifft eine gattungsgemässe Stromversorgungseinrichtung, umfassend eine erste elektrische Leitung und mindestens eine daran angeschlossene Batterie, sowie eine in der ersten elektrischen Leitung angeordnete Schmelzsicherung. Die Schmelzsicherung ist durch einen mittels einer Steuereinrichtung aktivierbaren Schalter auslösbar, der in einer zweiten Leitung angeordnet ist.

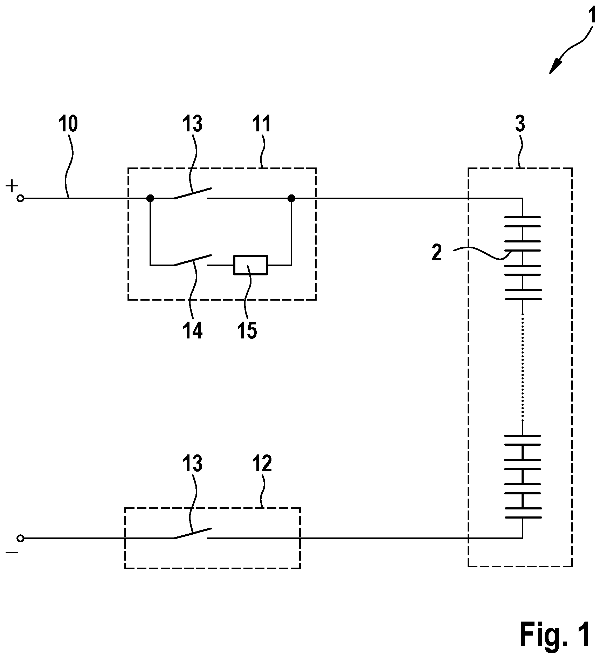

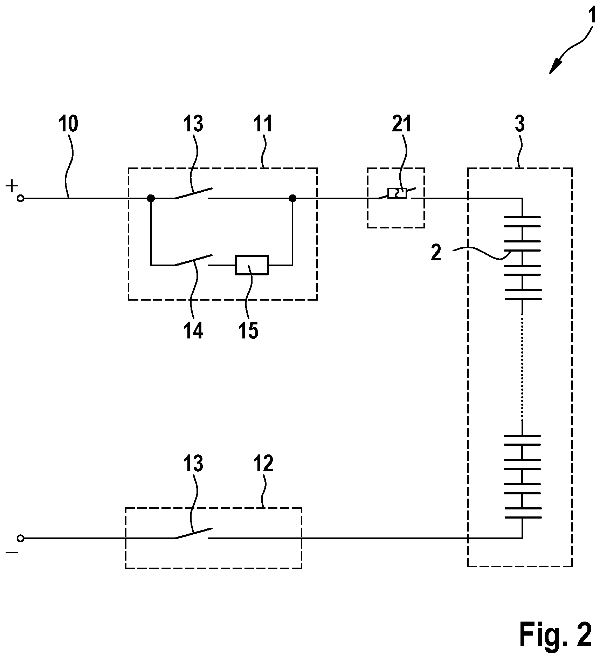

Die herkömmliche Stromversorgungseinrichtung ist aus den beiliegenden Figuren 1 und 2 ersichtlich.
Zunächst wird Bezug genommen auf Figur 1.
Eine herkömmliche Stromversorgungseinrichtung, insbesondere eine Stromversorgungseinrichtung zum Antrieb eines elektromotorisch antreibbaren Kraftfahrzeuges, umfasst eine Batterie 1, die gegebenenfalls mehrere Batteriezellen 2 aufweist, die in wenigstens einem Batteriegehäuse 3 angeordnet sind. Mittels einer ersten elektrischen Leitung 10 ist die Batterie 1 mit einer Lade- und Trenneinrichtung 11 verbunden. Diese Lade- und Trenneinrichtung 11 umfasst einen Trennschalter 13 sowie einen Ladeschalter 14 und einen daran in Reihe geschalteten Ladewiderstand 15.
Wie aus Figur 1 ersichtlich, kann die Lade- und Trenneinrichtung 11 zwischen einem Pluspol und der Batterie 1 angeordnet sein. Zur Erhöhung der Sicherheit kann in einer elektrischen Leitung zwischen dem Minuspol des Bordnetzes und der Batterie 1 eine weitere Trenneinrichtung 12 mit einem weiteren Trennschalter 13 angeordnet sein.
Der Ladeschalter 14 wird dann geschlossen, wenn eine Ladung der Batterie 1 beabsichtigt ist.
Der Trennschalter 13 kann manuell geöffnet werden, so dass die Batterie 1 vom Pluspol bzw. Minuspol des Netzes getrennt ist und Reparatur- oder Wartungsarbeiten ungefährdet durchgeführt werden können.
In Figur 2 ist im Wesentlichen die bereits zu Figur 1 erläuterte herkömmliche Stromversorgungseinrichtung dargestellt, wobei jedoch die in Figur 2 dargestellte Stromversorgungseinrichtung in der ersten elektrischen Leitung 10 zusätzlich eine Überstromschutzeinrichtung 21 aufweist. Diese Überstromschutzeinrichtung 21 trennt die erste elektrische Leitung 10, wenn ein Überstrom in der ersten elektrischen Leitung 10 vorhanden ist. Somit lässt sich bei einem Fehler, der zu einem Überstrom in der ersten elektrischen Leitung 10 führt, die Batterie 1 vom Netz trennen. Gegebenenfalls kann die Überstromschutzeinrichtung 21 manuell aus der ersten elektrischen Leitung entfernbar und/oder ausschaltbar sein.

### Offenbarung der Erfindung

Es wird erfindungsgemäß eine Stromversorgungseinrichtung mit den Merkmalen des Anspruchs 1 sowie ein entsprechendes Verfahren mit den Merkmalen des Anspruchs 7 bereitgestellt. Eine derartige Stromversorgungseinrichtung kann auch als Batteriesystem bezeichnet werden, wobei dieses Batteriesystem eine Mehrzahl von Batterien oder Batteriezellen aufweisen kann, die gegebenenfalls in so genannten Battery-Packs angeordnet sind. Der Trennschalter ist derart ausgestaltet, dass er im bestromten Zustand schließt, so dass bei Auslösung der Überstromschutzeinrichtung und der damit verbundenen Trennung der zweiten elektrischen Leitung der Trennschalter geöffnet wird und somit die an die erste elektrische Leitung angeschlossene Batterie nicht mehr mit dem gesamten Netz verbunden ist. Wartungsarbeiten können dann ungefährdet durchgeführt werden und in einem Störfall kann die Gefahr der Beschädigung der Batterie und gegebenenfalls eines mit der Batterie verbundenen Batterie-Management-Systems und/oder der Umgebung der Batterie zumindest verringert werden.
Der Vorteil der Erfindung liegt insbesondere darin, dass eine Trennung der an die Batterie angeschlossenen ersten elektrischen Leitung auch dann erfolgen kann, wenn die Überstromschutzeinrichtung in der zweiten elektrischen Leitung auslöst Diese Auslösung kann durch Überstrom in der zweiten elektrischen Leitung und/oder bei Auftreten eines Fehlers in der Batterie oder im Bordnetz realisiert werden.
Dadurch, dass die Überstromschutzeinrichtung in der zweiten elektrischen Leitung angeordnet ist, kann sie in einem die Batterie und auch ein Batterie-Management-System aufnehmenden Gehäuse integriert sein, so dass keine etwaige Undichtigkeiten bewirkenden Gehäuseöffnungen vorhanden sind. Es lassen sich dadurch Kosten für die Herstellung des Gehäuses sparen. Außerdem lässt sich eine längere Lebensdauer der Batterie auf Grund der verbesserten Abschottung gegen die Umgebung gewährleisten. Die erfindungsgemässe Stromversorgungseinrichtung umfasst das bereits genannte Batterie-Management-System, welches elektrisch mit der zweiten elektrischen Leitung verbunden ist und derart ausgestaltet ist, dass bei Feststellung einer unzulässigen Abweichung eines vom Batterie-Management-System detektierten Ist-Parameters von einem vorgegebenen Soll-Parameter die zweite elektrische Leitung derart vom Batterie-Management-System angesteuert wird, dass in der zweiten elektrischen Leitung ein die Auslösung der Überstromschutzeinrichtung bewirkbarer Stromfluss erzeugbar ist.
Die erste elektrische Leitung ist dabei zur Anlage einer ersten elektrischen Spannung ausgelegt und die zweite elektrische Leitung ist zur Anlage einer zweiten elektrischen Spannung ausgelegt, wobei die erste Spannung höher ist als die zweite Spannung. Vorzugsweise liegt die erste Spannung in einem Bereich, der zum Betrieb eines elektromotorisch angetriebenen Kraftfahrzeuges benötigt wird. Das kann der Hoch-oder Mittelspannungsbereich sein, nämlich im Bereich bis zu 800 V.
Der Spannungsbereich, für den die zweite elektrische Leitung ausgelegt ist, ist dagegen ein Niederspannungsbereich, nämlich eine Kleinspannung als Wechselspannung bis 50 V und als Gleichspannung bis 120 V. Um Gesundheitsgefährdungen auszuschließen sollte die Spannung weniger als 60 V betragen.
Der genannte Soll-Parameter kann gegebenenfalls auch einen Bereich umfassen. Durch die genannte Ausgestaltung kann bei Feststellung eines Betriebs- oder Batteriefehlers durch das Batterie-Management-System in einfacher Weise dieses die Überstromschutzeinrichtung ansteuern, so dass die Überstromschutzeinrichtung die zweite elektrische Leitung trennt und somit veranlasst, dass der Trennschalter in der ersten elektrischen Leitung geöffnet wird und dadurch die Batterie vom restlichen Netz getrennt wird. Das Batterie-Management-System kann somit in einfacher Weise bei Detektion irgendeiner unerwünschten Abweichung oder eines Fehlers oder Missbrauchs die Trennung der ersten elektrischen Leitung bewirken und somit die Batterie von weiteren elektrischen Aggregaten abkoppeln.

In einer weiteren bevorzugten Ausgestaltungsform umfasst die Stromversorgungseinrichtung in der zweiten elektrischen Leitung einen zusätzlichen, vom Batterie-Management-System ansteuerbaren Schalter. Das heißt, dass bevorzugt zwischen der Überstromschutzeinrichtung und dem Trennschalter in Reihe geschaltet ein zusätzlicher Schalter angeordnet ist, der ebenfalls geschlossen sein muss, damit der Trennschalter geschlossen bleibt und die Batterie an das Netz angeschlossen bleibt.

Zur weiteren Absicherung der Stromversorgungseinrichtung kann in der ersten elektrischen Leitung eine erste Schmelzsicherung angeordnet sein. Alternativ kann in der ersten elektrischen Leitung auch ein Schutzschalter angeordnet sein. Die erste Schmelzsicherung oder auch der Schutzschalter in der ersten elektrischen Leitung bewirkt einen direkten Schutz der Batterie und/oder des daran angeschlossenen Netzes gegen Überlastströme.

In einer ersten Alternative der Überstromschutzeinrichtung ist diese als eine Schmelzsicherung ausgestaltet. Das heißt, dass die Stromversorgungseinrichtung, insofern sie die bereits genannte erste Schmelzsicherung in der ersten elektrischen Leitung aufweist, weiterhin eine zweite Schmelzsicherung aufweisen kann, nämlich in der zweiten elektrischen Leitung.

Diese zweite Schmelzsicherung kann gegebenenfalls Steckkontakte aufweisen, damit sie manuell in die zweite elektrische Leitung eingesteckt und auch wieder herausgezogen werden kann. Der Widerstand der zweiten Schmelzsicherung ist wesentlich geringer als der Widerstand der ersten Schmelzsicherung, da die zweite Schmelzsicherung in einer elektrischen Leitung angeordnet ist, die für eine wesentlich geringere elektrische Leistung als die erste elektrische Leitung ausgelegt ist.

Die Schmelzsicherung in der zweiten elektrischen Leitung kann ein Gewinde aufweisen, um in eine Schraubfassung eingeschraubt zu werden und dort auf Grund einer Kontaktierung einen Stromkreis zu schließen.

Eine dritte Alternative ist die Ausbildung der Schmelzsicherung als eine Steckbeziehungsweise eine Klemmsicherung, die auf Grund von Klemmkräften zwischen zwei Kontakten die elektrische Verbindung gewährleistet. Bei Anwendung der Schmelzsicherung als Klemmsicherung in einem Kraftfahrzeug kann eine zusätzliche mechanische und bevorzugt formschlüssig wirkende Verriegelung zur Fixierung der Sicherung angeordnet sein, wie zum Beispiel ein Exzenter oder ein Clip.

Neben der Ausgestaltung als Schmelzsicherung kann die Überstromschutzeinrichtung auch als Leistungsschutzschalter ausgebildet sein.

Der Strom in der zweiten elektrischen Leitung, der vom Batterie-Management-System ausgelöst wird, muss entsprechend groß sein, um in der zweiten elektrischen Leitung eine Schmelzung der Sicherung oder eine Öffnung des Leistungsschutzschalters zu bewirken. Dabei sollte jedoch der Widerstand der Überstromschutzeinrichtung in Form der Schmelzsicherung oder des Leistungsschutzschalters ausreichend hoch sein, um bei Nutzung der zweiten elektrischen Leitung als Versorgungsleitung für das Batterie-Management-System nicht bereits durch die Versorgungsströme im normalen Betrieb ausgelöst zu werden.

Bei Ausgestaltung der Überstromschutzeinrichtung als Schmelzsicherung oder als Leistungsschutzschalter wird auf Grund von Durchschmelzung der Sicherung oder Ausschalten des Leistungsschutzschalters ein einfaches Wiedereinschalten des Trennschalters verhindert, so dass zum Einschalten des Trennschalters weitere Schritte wie zum Beispiel Auswechseln der Sicherung oder Einschalten des Leistungsschutzschalters notwendig sind. Dadurch wird die Gefahr eines unbefugten oder versehentlichen Wiedereinschaltens bei Wartungs- oder Reparaturarbeiten wesentlich gemindert. Außerdem wird in dem Fall, in dem das Batterie-Management-System ein Ausschalten der Batterie wegen eines aufgetretenen Fehlers oder Defektes initiiert hat, ein einfaches Wiedereinschalten verhindert.

In Ausgestaltung der Überstromschutzeinrichtung als Schmelzsicherung oder als Leistungsschutzschalter kann vorgesehen sein, dass die Schmelzsicherung manuell entfernbar ist oder der Leistungsschutzschalter manuell schaltbar ist. Dadurch lässt sich erreichen, dass manuell ein Stromfluss in der zweiten elektrischen Leitung unterbrochen werden kann und somit auch der Trennschalter in der ersten elektrischen Leitung ausgelöst werden kann. Die Schmelzsicherung lässt sich im Bedarfsfall entfernen, so dass die Gefahr einer unzulässigen oder ungewollten Wiedereinschaltung des Batteriesystems weiter gemindert wird. In Ausgestaltung der Überstromschutzeinrichtung als Leistungsschutzschalter ist dieser derart am Gehäuse angeordnet, dass er sich manuell bedienen lässt. Gegebenenfalls kann ein Bedienelement des Leistungsschutzschalters mechanisch gegen unzulässige oder ungewollte Einschaltung blockiert werden. Dazu eignet sich eine Klappe, die über einer Aussparung im Gehäuse, in der der Leistungsschutzschalter angeordnet ist, zwecks Abdichtung und Schutz des Leistungsschutzschalters angeordnet ist.

Dabei muss jedoch nicht zwingend eine Öffnung im Batteriegehäuse zur Durchführung von Leitungen der Überstromschutzeinrichtung vorhanden sein, da die Überstromschutzeinrichtung mit dem Batterie-Management-System verbunden ist, welches gegebenenfalls auch außerhalb des Batteriegehäuses angeordnet sein kann.

Erfindungsgemäß wird weiterhin ein Verfahren zum Trennen einer Batterie, insbesondere einer Lithium-Ionen-Batterie, von einer mit einer ersten elektrischen Leitung mit der Batterie gekoppelten Anschlusseinrichtung zur Verfügung gestellt, wobei die Trennung der Batterie von der Anschlusseinrichtung mittels eines in der ersten elektrischen Leitung angeordneten elektrisch betätigbaren Trennschalters zur Unterbrechung des Stromflusses in der ersten elektrischen Leitung realisiert wird. In einer zur Stromversorgung des Trennschalters dienenden zweiten elektrischen Leitung unterbricht eine Überstromschutzeinrichtung den Stromfluss, wodurch der Trennschalter derart angesteuert wird, dass er den Stromfluss in der ersten elektrischen Leitung unterbricht. Die genannte Anschlusseinrichtung dient dabei zum Anschluss wenigstens eines von der Batterie zu speisenden elektrischen Aggregates. Die Anschlusseinrichtung kann somit insbesondere ein Bordnetz eines Kraftfahrzeuges sein.

Das Verfahren ist bevorzugt derart ausgestaltet, dass ein Batterie-Management-System derart die zweite elektrische Leitung ansteuert, dass in der zweiten elektrischen Leitung ein Stromfluss erzeugt wird, der die Auslösung der Überstromschutzeinrichtung bewirkt.

Das Batterie-Management-System kann auch einen zusätzlichen Schalter ansteuern, wobei die Überstromschutzeinrichtung und der zusätzliche Schalter in Reihe geschaltet und somit in einer Konjunktion elektrisch miteinander verknüpft sind. Der zusätzliche Schalter ist dabei vorzugsweise ein Öffner, so dass bei Einschaltung eines entsprechenden Stromflusses durch das Batterie-Management-System in der zweiten elektrischen Leitung und damit Auslösung der Überstromschutzeinrichtung und/oder vom Batterie-Management-System bewirkten Öffnung des zusätzlichen Schalters der Trennschalter geöffnet wird und damit die Trennung der ersten elektrischen Leitung realisiert wird. Es lässt sich somit auf einen Überstrom in der zweiten elektrischen Leitung durch die Überstromschutzeinrichtung reagieren und auf etwaige, vom Batterie-Management-System erkannte Fehler, auf Grund derer das Batterie-Management-System die zweite elektrische Leitung mit einem Überstrom beschickt, der zur Auslösung der Überstromschutzeinrichtung führt, und/oder die Öffnung des zusätzlichen Schalters bewirkt wird. Zur Öffnung des Trennschalters reicht dabei die Auslösung der Überstromschutzeinrichtung oder die Öffnung des zusätzlichen Schalters aus. Um den Anschluss der Batterie am Netz zu gewährleisten, ist es jedoch erforderlich, dass ein Stromfluss über die Überstromschutzeinrichtung sowie über den zusätzlichen Schalter realisiert wird.

Ergänzend wird erfindungsgemäß ein Kraftfahrzeug, insbesondere ein elektromotorisch antreibbares Kraftfahrzeug, zur Verfügung gestellt, welches ein erfindungsgemäßes Stromversorgungssystem umfasst. Dabei kann die genannte erste elektrische Leitung Bestandteil eines Hochspannungs-Bordnetzes sein, an das der Antriebsmotor des Kraftfahrzeuges angeschlossen ist.

### Zeichnungen

Die Erfindung wird im Folgenden anhand der in den beiliegenden Zeichnungen dargestellten Ausführungsbeispiele erläutert. Es zeigen:
- Figur 1: eine herkömmliche Stromversorgungseinrichtung,
- Figur 2: eine herkömmliche Stromversorgungseinrichtung mit Serviceeinrichtung,
- Figur 3: eine erfindungsgemäße Stromversorgungseinrichtung,
- Figur 4: eine Schmelzsicherung in einer Schraubfassung, und
- Figur 5: eine Schmelzsicherung mit Steckkontakten.

Auf die Figuren 1 und 2 wurde bereits zur Erläuterung des Standes der Technik Bezug genommen.

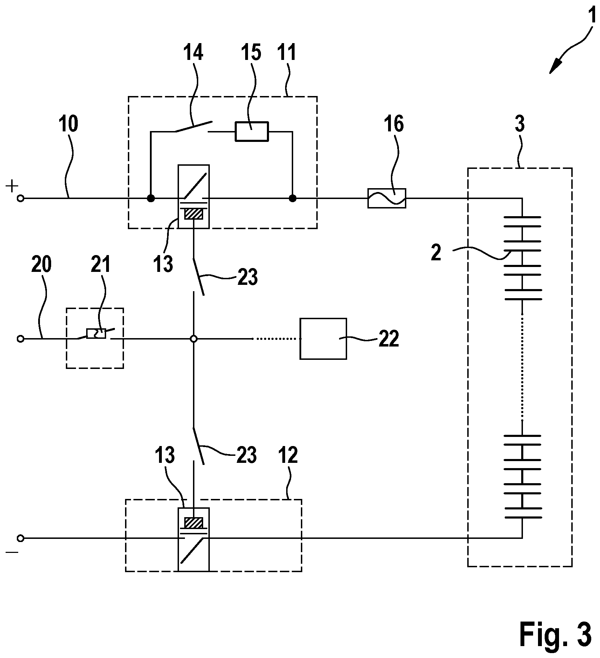

Zur Erläuterung der vorliegenden Erfindung wird auf Figur 3 verwiesen. Im Gegensatz zu der in den Figuren 1 und 2 dargestellten herkömmlichen Stromversorgungseinrichtung weist die erfindungsgemäße Stromversorgungseinrichtung eine zweite elektrische Leitung 20 auf, in der die Überstromschutzeinrichtung 21 angeordnet ist. Die Überstromschutzeinrichtung 21 ist in Reihe mit dem Trennschalter 13 geschaltet, wobei der Trennschalter 13 elektrisch betätigbar ist. Das heißt, dass der Trennschalter 13 nur dann geschlossen ist, wenn er mit Strom versorgt ist. Bei Auslösung der Überstromschutzeinrichtung 21 in der zweiten elektrischen Leitung 20 wird somit der Stromfluss in der zweiten elektrischen Leitung 20 unterbrochen und der Trennschalter 13 nicht mehr mit Strom versorgt, so dass er die erste elektrische Leitung 10 öffnet und die Batterie 1 somit vom Netz abkoppelt.

Eine erfindungsgemäße Stromversorgungseinrichtung kann zwischen einem Pluspol und der Batterie1 und/ oder zwischen einem Minuspol und der Batterie angeordnet sein, wobei der Plus- und der Minuspol Koppelstellen an einem Netz, insbesondere an einem Bordnetz sein können, so dass mittels der Erfindung die Batterie 1 vom Bordnetz getrennt werden kann.

Vorzugsweise ist an die zweite elektrische Leitung 20 auch das Batterie-Management-System 22 angeschlossen, welches derart ausgestaltet sein kann, dass es Fehler beim Betrieb der Batterie 1 und/oder des Netzes erkennt. Bei Erkennung eines solchen Fehlers ist das Batterie-Management-System 22 vorteilhafterweise in der Lage, einen derartigen Überstrom in der zweiten elektrischen Leitung 20 zu erzeugen, der zur Auslösung der Überstromschutzeinrichtung 21 führt und somit, wie bereits beschrieben, die Batterie 1 vom Netz trennt.

Zur weiteren Erhöhung der Sicherheit kann vorgesehen sein, dass in Reihe mit der Überstromschutzeinrichtung 21 angeordnet ein zusätzlicher Schalter 23 vorhanden ist, der in bevorzugter Ausgestaltung der Erfindung ebenfalls vom Batterie-Management-System 22 angesteuert werden kann. Das Batterie-Management-System 22 kann somit bei Erkennung eines Fehlers die zweite elektrische Leitung 20 mit einem Überstrom versehen und/oder den zusätzlichen Schalter 23 öffnen. Die Auslösung der Überstromschutzeinrichtung 21 kann jedoch auch unabhängig von einer Fehlerdetektion durch das Batterie-Management-System 22 bei Auftreten eines nicht vom Batterie-Management-System 22 ausgelösten Überstroms in der zweiten elektrischen Leitung 20 erfolgen.

Um ebenso einen Schutz gegen Überströme in der ersten elektrischen Leitung 10 zu realisieren, kann, wie in Figur 3 dargestellt, auch in der ersten elektrischen Leitung 10 eine Überstromschutzeinrichtung, zum Beispiel in Form einer ersten Schmelzsicherung 16 angeordnet sein.

Die Überstromschutzeinrichtung 21 in der zweiten elektrischen Leitung 20 kann, wie bereits erwähnt, als Schmelzsicherung oder auch als Leistungsschutzschalter ausgestaltet sein.

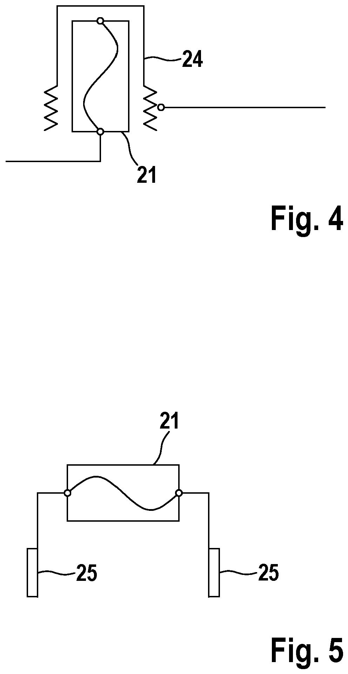

Bei Ausgestaltung als Schmelzsicherung kann sie mit einem Gewinde versehen sein und in eine entsprechend ausgestaltete Schraubfassung 24 eingeschraubt sein, wie in Figur 4 dargestellt ist.

In einer alternativen Ausgestaltungsform kann die Überstromschutzeinrichtung 21 als Schmelzsicherung Steckkontakte 25 aufweisen.

Durch die Einschraubbarkeit der Überstromschutzeinrichtung 21 beziehungsweise durch die Steckbarkeit der Überstromschutzeinrichtung 21 kann diese in einfacher Weise manuell in die zweite elektrische Leitung 20 integriert werden. Dies ermöglicht ein einfaches und schnelles Entfernen der Überstromschutzeinrichtung 21 aus der zweiten elektrischen Leitung 20 und damit eine Öffnung des Trennschalters 13, verbunden mit einer erhöhten Sicherheit gegen unbefugtes oder ungewolltes Wiedereinschalten.

## Patentansprüche

1. Stromversorgungseinrichtung, umfassend eine erste elektrische Leitung (10) und mindestens eine daran angeschlossene Batterie (1), insbesondere eine Lithium-Ionen-Batterie, ein Batterie-Management-System (22) und einen in der ersten elektrischen Leitung (10) angeordneten elektrisch betätigbaren Trennschalter (13) zur Unterbrechung eines Stromflusses in der ersten elektrischen Leitung (10), wobei der Trennschalter (13) nur dann geschlossen ist, wenn er mit Strom versorgt ist, wobei die Stromversorgungseinrichtung weiterhin eine zweite elektrische Leitung (20) zur Stromversorgung des Trennschalters (13) umfasst, wobei in der zweiten elektrischen Leitung (20) eine Überstromschutzeinrichtung (21) angeordnet ist, mit der ein Stromfluss in der zweiten elektrischen Leitung (20) unterbrochen werden kann und somit der Trennschalter (13) derart angesteuert werden kann, dass er den Stromfluss in der ersten elektrischen Leitung (10) unterbricht,
und wobei das Batterie-Management-System (22) elektrisch mit der zweiten elektrischen Leitung (20) verbunden ist und derart ausgestaltet ist, dass bei Feststellung einer unzulässigen Abweichung eines von dem Batterie-Management-System (22) detektierten Ist-Parameters von einem vorgegebenen Soll-Parameter die zweite elektrische Leitung (20) derart vom Batterie-Management-System (22) angesteuert wird, dass in der zweiten elektrischen Leitung (20) ein die Auslösung der Überstromschutzeinrichtung (21) bewirkbarer Stromfluss erzeugbar ist.

2. Stromversorgungseinrichtung nach Anspruch 1, die in der zweiten elektrischen Leitung (20) einen zusätzlichen, vom Batterie-Management-System (22) ansteuerbaren Schalter (23) aufweist.

3. Stromversorgungseinrichtung nach einem der Ansprüche 1 bis 2, die in der ersten elektrischen Leitung (10) eine erste Schmelzsicherung (16) aufweist.

4. Stromversorgungseinrichtung nach einem der Ansprüche 1 bis 3, bei der die Überstromschutzeinrichtung (21) eine zweite Schmelzsicherung ist.

5. Stromversorgungseinrichtung nach einem der Ansprüche 1 bis 3, bei der die Überstromschutzeinrichtung (21) ein Leistungsschutzschalter ist.

6. Stromversorgungseinrichtung nach Anspruch 4 oder 5, umfassend ein Batteriegehäuse (3), wobei die Überstromschutzeinrichtung (21) an einer Batteriegehäuse-Außenseite angeordnet ist und
iii) in Ausgestaltung gemäß Anspruch 4 als zweite Schmelzsicherung manuell entfernbar ist, oder
iv) in Ausgestaltung gemäß Anspruch 5 als Leistungsschutzschalter manuell schaltbar ist.

7. Verfahren zum Trennen einer Batterie (1), insbesondere einer Lithium-Ionen-Batterie, von einer mit einer ersten elektrischen Leitung (10) mit der Batterie (1) gekoppelten Anschlusseinrichtung, mittels eines in der ersten elektrischen Leitung (10) angeordneten elektrisch betätigbaren Trennschalters (13) zur Unterbrechung eines Stromflusses in der ersten elektrischen Leitung (10), wobei der Trennschalter nur dann geschlossen ist, wenn er mit Strom versorgt ist, und wobei in einer zur Stromversorgung des Trennschalters (13) dienenden zweiten elektrischen Leitung (20) eine Überstromschutzeinrichtung (21) den Stromfluss in der zweiten elektrischen Leitung (20) unterbricht und somit der Trennschalter (13) derart angesteuert wird, dass er den Stromfluss in der ersten elektrischen Leitung (10) unterbricht,
und wobei ein Batterie-Management-System (22) derartig die zweite elektrische Leitung (20) ansteuert, dass in der zweiten elektrischen Leitung (20) ein Stromfluss erzeugt wird, der die Auslösung der Überstromschutzeinrichtung (21) bewirkt.

9. Kraftfahrzeug, insbesondere elektromotorisch antreibbares Kraftfahrzeug, umfassend eine Stromversorgungseinrichtung gemäß einem der Ansprüche 1 bis 6.

## Claims

1. Power supply device comprising a first electrical line (10) and at least one battery (1), in particular a lithium-ion battery, connected thereto, a battery management system (22) and an electrically actuatable isolating switch (13), which is arranged in the first electrical line (10), for interrupting a flow of current in the first electrical line (10), wherein the isolating switch (13) is only closed when it is supplied with current, wherein the power supply device also comprises a second electrical line (20) for supplying power to the isolating switch (13),
wherein an overcurrent protection device (21) is arranged in the second electrical line (20) and can be used to interrupt a flow of current in the second electrical line (20), and thus the isolating switch (13) can be controlled in such a way that it interrupts the flow of current in the first electrical line (10), and wherein the battery management system (22) is electrically connected to the second electrical line (20) and is configured in such a way that, when an inadmissible deviation of an actual parameter, which is detected by the battery management system (22), from a predefined setpoint parameter is determined, the second electrical line (20) is controlled by the battery management system (22) in such a way that a flow of current which can cause the overcurrent protection device (21) to be tripped can be produced in the second electrical line (20).

2. Power supply device according to Claim 1, which has an additional switch (23), which can be controlled by the battery management system (22), in the second electrical line (20).

3. Power supply device according to one of Claims 1 to 2, which has a first fuse (16) in the first electrical line (10).

4. Power supply device according to one of Claims 1 to 3, in which the overcurrent protection device (21) is a second fuse.

5. Power supply device according to one of Claims 1 to 3, in which the overcurrent protection device (21) is a circuit breaker.

6. Power supply device according to Claim 4 or 5, comprising a battery housing (3), wherein the overcurrent protection device (21) is arranged on an outer side of the battery housing and
iii) when configured as a second fuse, according to Claim 4, can be manually removed, or
iv) when configured as a circuit breaker, according to Claim 5, can be manually switched.

7. Method for isolating a battery (1), in particular a lithium-ion battery, from a connection device, coupled to the battery (1) by a first electrical line (10), by means of an electrically actuatable isolating switch (13), which is arranged in the first electrical line (10), for interrupting a flow of current in the first electrical line (10), wherein the isolating switch is only closed when it is supplied with current, and wherein an overcurrent protection device (21) in a second electrical line (20), which serves to supply power to the isolating switch (13), interrupts the flow of current in the second electrical line (20), and thus the isolating switch (13) is controlled in such a way that it interrupts the flow of current in the first electrical line (10), and wherein
a battery management system (22) controls the second electrical line (20) in such a way that a flow of current which causes the overcurrent protection device (21) to be tripped is produced in the second electrical line (20).

9. Motor vehicle, in particular motor vehicle which can be driven by an electric motor, said motor vehicle comprising a power supply device according to one of Claims 1 to 6.

## Revendications

1. Dispositif d'alimentation en courant comprenant une première ligne électrique (10) et au moins une batterie (1) raccordée à celle-ci, en particulier une batterie au lithium-ion, un système de gestion de batterie (22) et un sectionneur (13) actionnable électriquement disposé sur la première ligne électrique (10) pour interrompre un flux de courant passant sur la première ligne électrique (10),
dans lequel le sectionneur (13) n'est fermé que lorsqu'il est alimenté en courant, dans lequel l'alimentation en courant comprend en outre une seconde ligne électrique (20) pour alimenter en courant le sectionneur (13), dans lequel un dispositif de protection contre les surintensités (21) est disposé sur la seconde ligne électrique (20), au moyen duquel un flux de courant passant sur la seconde ligne électrique (20) peut être interrompu et le sectionneur (13) peut ainsi être commandé de telle manière qu'il interrompe le flux de courant passant sur la première ligne électrique (10), dans lequel le système de gestion de batterie (22) est électriquement relié à la seconde ligne électrique (20) et est réalisé de telle manière que lorsqu'un écart non admissible d'un paramètre réel détecté par le système de gestion de batterie (22) par rapport à un paramètre prédéterminé est détecté, la seconde ligne électrique (20) soit commandée par le système de gestion de batterie (22) de façon qu'un courant pouvant déclencher le dispositif de protection contre les surintensités (21) puisse être généré sur la seconde ligne électrique (20).

2. Dispositif d'alimentation en courant selon la revendication 1, comportant sur la seconde ligne électrique (20) un interrupteur supplémentaire (23) pouvant être commandé par le système de gestion de batterie (22).

3. Dispositif d'alimentation en courant selon l'une des revendications 1 à 2, comportant un premier fusible (16) sur la première ligne électrique (10).

4. Dispositif d'alimentation en courant selon l'une des revendications 1 à 3, dans lequel le dispositif de protection contre les surintensités (21) est un second fusible.

5. Dispositif d'alimentation en courant selon l'une des revendications 1 à 3, dans lequel le dispositif de protection contre les surintensités (21) est un disjoncteur.

6. Dispositif d'alimentation en courant selon la revendication 4 ou 5, comprenant un boîtier de batterie (3), dans lequel le dispositif de protection contre les surintensités (21) est disposé sur une face extérieure d'un boîtier de batterie et
iii) peut être retiré manuellement en tant que second fusible dans une configuration selon la revendication 4, ou
iv) peut être commuté manuellement en tant que disjoncteur dans une configuration selon la revendication 5.

7. Procédé destiné à séparer une batterie (1), en particulier une batterie au lithium-ion, d'un dispositif de raccordement couplé à la batterie (1) par une première ligne électrique (10), au moyen d'un sectionneur actionnable électriquement (13) disposé sur la première ligne électrique (10) pour interrompre un flux de courant passant sur la première ligne électrique (10), dans lequel le sectionneur n'est fermé que lorsqu'il est alimenté en courant, et dans lequel, sur une seconde ligne électrique (20) servant à alimenter en courant le sectionneur (13), un dispositif de protection contre les surintensités (21) interrompt le flux de courant passant sur la seconde ligne électrique (20), le sectionneur (13) étant ainsi commandé de manière à interrompre le flux de courant passant sur la première ligne électrique (10), et dans lequel un système de gestion de batterie (22) commande la seconde ligne électrique (20) de telle manière qu'un flux de courant soit généré sur la seconde ligne électrique (20), lequel courant déclenche le dispositif de protection contre les surintensités (21).

9. Véhicule à moteur, en particulier un véhicule à moteur électrique, comprenant un dispositif d'alimentation en courant selon l'une des revendications 1 à 6.
